(19) Europäisches Patentamt
European Patent Office
Office européen des brevets

(11) **EP 3 425 845 A1**

(12) **EUROPÄISCHE PATENTANMELDUNG**

(43) Veröffentlichungstag:
**09.01.2019 Patentblatt 2019/02**

(51) Int Cl.:
*H04L 9/32* (2006.01)    *H04L 9/12* (2006.01)

(21) Anmeldenummer: **17179823.4**

(22) Anmeldetag: **05.07.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Aschauer, Hans**
**81829 München (DE)**
• **Fries, Steffen**
**85598 Baldham (DE)**
• **Merli, Dominik**
**86609 Donauwörth (DE)**

(54) **VERFAHREN UND VORRICHTUNG ZUM ERZEUGEN EINES KRYPTOGRAPHISCHEN ZEITSTEMPELS FÜR EIN DIGITALES DOKUMENT AUF MEHRHEITSBASIS**

(57) Es wird ein Verfahren zum Erzeugen eines kryptographischen Zeitstempels (3) für ein digitales Dokument (2) unter Verwendung mehrerer Zeitserver (80-83) vorgeschlagen. Bei dem Verfahren wird ein Noncewert (20) erzeugt (S1) und ein aktueller Hashwert (30) von dem Noncewert (20) und dem digitalen Dokument (2) gebildet. Sodann wird (S2) wiederholt einer der Zeitserver (80-83) ausgewählt, der aktuelle Hashwert (30-32) an den ausgewählten Seitserver (80-83) übermittelt, von dem ausgewählten Zeitserver (80-82) eine Antwort (40-42) empfangen, die eine digitale Signatur (50-52) des aktuellen Hashwerts (30-32) und eine Zeitangabe (50-52) umfasst, und ein weiterer Hashwert (31-32) aus der empfangenen Antwort (40-42) bestimmt und als der aktuelle Hashwert verwendet (31-32). Der kryptographische Zeitstempel (3) für das digitale Dokument (2) wird aus dem Noncewert (20) und den mehreren empfangenen Antworten (40-42) gebildet (S3). Das Verfahren erzeugt einen manipulationssicherer Zeitstempel (3) auf Mehrheitsbasis und eignet sich zur Datierung und Protokollierung im Bereich Automatisierung und IoT.

FIG 1

EP 3 425 845 A1

**Beschreibung**

Die vorliegende Erfindung betrifft ein Verfahren und eine Vorrichtung zum Erzeugen eines kryptographischen Zeitstempels für ein digitales Dokument unter Verwendung mehrerer Zeitserver.

In einem digitalen Kommunikationsszenario kann es erforderlich sein, einen Nachweis zu erbringen, dass Informationen, wie ein digitales Dokument, zu einem bestimmten Zeitpunkt vorgelegen haben und seitdem unverändert sind.

Bekannt ist ein Dienst, der ein digitales Dokument oder einen kryptographischen Hashwert des digitalen Dokuments entgegennimmt, mit einer aktuellen Zeitangabe verknüpft und eine digitale Signatur davon erstellt. Die digitale Signatur kann in Kombination mit der Zeitangabe als der benötigte Nachweis dienen. Hierfür ist erforderlich, dass die den Nachweis führende Entität sowie die Entität, gegenüber derer der Nachweis geführt wird, jeweils demselben Dienst vertrauen.

Bekannt ist ferner, das digitale Dokument oder den kryptographischen Hashwert auf geeignete Weise zum Beispiel in einer Tageszeitung zu veröffentlichen oder in einer durch Proof-of-Work oder einen ähnlichen Mechanismus gegen nachträgliche Manipulationen geschützten Blockchain abzuspeichern.

Bekannt ist außerdem ein Verfahren zur groben zeitlichen Synchronisation von Uhren, bei dem ein Client Zeitangaben von mehreren Zeitservern bezieht und einen kryptographischen Beweis erhält, falls einer der Zeitserver einen falschen Wert liefert (https://roughtime.googlesource.com/roughtime).

Bekannt sind ferner Sicherheitsprotokolle für das NTP- oder das PTP-Protokoll unter Verwendung zeitserverspezifischer Schlüssel.

Bekannt ist des Weiteren die Einschränkung des Wirkbereiches von Zertifikaten durch Area-of-Responsibility-Identifier gemäß IEC 62351-8.

Bekannt sind zudem Verfahren zur Certificate Transparency gemäß RFC6962, die basierend auf Merkle Hash Trees und einem zentralen Protokollierungsdienst das zeitliche Nachvollzeihen der Ausstellung eines Zertifikates erlauben.

Vor diesem Hintergrund besteht eine Aufgabe der vorliegenden Erfindung darin, die Erzeugung von kryptographischen Zeitstempeln für digitale Dokumente zu verbessern.

Demgemäß wird ein Verfahren zum Erzeugen eines kryptographischen Zeitstempels für ein digitales Dokument unter Verwendung mehrerer Zeitserver vorgeschlagen. Das vorgeschlagene Verfahren umfasst: a) Erzeugen eines Noncewerts und Bestimmen eines aktuellen Hashwerts durch Anwenden einer vorbestimmten Hashfunktion auf den Noncewert und das digitale Dokument; b) wiederholtes Durchführen der folgenden Schritte: b1) Auswählen eines der mehreren Zeitserver; b2) Übermitteln des aktuellen Hashwerts an den ausgewählten Zeitserver; b3) Empfangen einer von dem ausgewählten Zeitserver erstellten Antwort, die eine digitale Signatur des aktuellen Hashwerts und eine Zeitangabe umfasst; b4) Bestimmen eines weiteren Hashwerts durch Anwenden der vorbestimmten Hashfunktion auf die empfangene Antwort und b5) Verwenden des weiteren Hashwerts als den aktuellen Hashwert; und c) Bilden des kryptographischen Zeitstempels für das digitale Dokument aus dem Noncewert und den mehreren empfangenen Antworten.

Ein digitales Dokument kann eine Datenfolge beliebiger Länge sein, wie beispielsweise eine Textdatei, eine Protokolldatei oder eine Binärdatei, die eine digitale Repräsentation eines Dokuments, wie beispielsweise einer Urkunde, eines Vertrags oder eines Protokolls darstellt. Beispiele für ein digitales Dokument sind ein digitaler Vertrag, ein Protokoll über Bedienerentscheidungen bei einer technischen Anlage oder ein maschineller Vertrag zwischen mehreren Automatisierungseinrichtungen in einem Internet-of-Things-Netzwerk.

Ein kryptographischer Zeitstempel kann eine Datenfolge sein, die benutzt werden kann, um mittels kryptographischer Operationen zweifelsfrei zu überprüfen, ob das digitale Dokument zu einer von dem kryptographischen Zeitstempel bezeichneten Zeit in unveränderter Form vorlag. Ein kryptographischer Zeitstempel kann als digitale Repräsentation eines Stempel- oder Siegelabdrucks veranschaulicht werden.

Ein Zeitserver im Sinne des vorgeschlagenen Verfahrens ist eine Einheit, die dazu eingerichtet ist, einen Wert von vorbestimmter Breite, wie beispielsweise einen Noncewert, zu empfangen und in Reaktion darauf eine Antwort zu übertragen, wobei es sich bei der Antwort um eine Datenfolge handelt, die eine digitale Signatur des empfangenen Werts und eine Zeitangabe umfasst. Ein Beispiel für einen Zeitserver, der mit dem vorgeschlagenen Verfahren benutzt werden kann, ist ein Server, der das Roughtime-Protokoll implementiert.

Ein jeweiliger Zeitserver kann hardwaretechnisch oder softwaretechnisch implementiert sein. Die mehreren Zeitserver können räumlich, in einer Cloud und insbesondere über verschiedene Regionen oder Jurisdiktionen verteilt sein.

Ein Noncewert ist insbesondere ein zufällig oder pseudozufällig ermittelter Wert von vorbestimmter Breite aus einem vorbestimmten, insbesondere sehr großen, Wertebereich, derart, dass es hinreichend unwahrscheinlich ist, dass ein selber Noncewert mehrmals verwendet wird. Alternativ dazu kann ein Noncewert auch ein Wert eines Zählers sein, der bei jedem Erzeugen eines Noncewerts um einen vorbestimmten Betrag hochgezählt wird, derart, dass mindestens während einer Lebensdauer von zum Erzeugen der kryptographischen Zeitstempel verwendeten Schlüsseln nur einmal verwendet wird.

Eine Hashfunktion ist eine Funktion, die eine Eingabemenge auf eine Ausgabemenge abbildet. Die Eingabemenge kann Elemente unterschiedlicher Längen, beispielsweise Datenfolgen, wie digitale Dokumente beliebiger Länge, umfassen. Die Ausgabemenge umfasst Hash-Werte einer vorbestimmten Breite. Insbesondere kann das Berechnen das Hashwerts für ein gegebenes Element der Eingabemenge anhand der Hashfunktion einen geringeren, insbesondere einen um viele Größenordnungen geringeren, Rechenaufwand erfordern als das Ermitteln eines Elements der Eingabemenge, das zu einem vorgegebenen Hashwert passt. Ein Beispiel für die vorbestimmte Hashfunktion ist SHA256. Ein weiteres Beispiel für die vorbestimmte Hashfunktion ist eine Hashfunktion auf Basis von Salsa20.

Vorzugsweise kann die Hashfunktion insbesondere die Eigenschaft der Kollisionsresistenz aufweisen. Kollisionsresistenz liegt insbesondere vor, wenn es praktisch undurchführbar ist, zwei Elemente der Eingabemenge zu ermitteln, die von der Hashfunktion auf einen selben Hashwert abgebildet werden.

Die vorbestimmte Breite der von dem Zeitserver zu empfangenden Werte, die vorbestimmte Breite des Noncewerts und die vorbestimmte Breite der Hashwerte der Hashfunktion können insbesondere gleich sein.

Eine Zeitangabe ist insbesondere eine Datenfolge, die mindestens ein Datum und vorzugsweise eine Uhrzeit angibt. Ein Beispiel für eine Zeitangabe ist ein Unix-Timestamp.

Unter Anwenden der Hashfunktion auf mehrere Elemente, wie beispielsweise auf den Noncewert und das digitale Dokument, ist insbesondere zu verstehen, dass die mehreren Elemente verknüpft, wie beispielsweise konkateniert bzw. aneinandergehängt, werden, und die Hashfunktion auf das Ergebnis der Verknüpfung angewendet wird.

Gleichfalls ist unter Bilden des kryptographischen Zeitstempels aus mehreren Elementen, d.h. aus dem Noncewert und den mehreren empfangenen Antworten, insbesondere das Bilden einer Datenfolge durch Konkatenieren der jeweiligen Elemente zu verstehen.

Gemäß dem vorgeschlagenen Verfahren wird insbesondere zunächst ein erster Hashwert von einem Ergebnis einer Verknüpfung aus einem mit einem Zeitstempel zu versehenden Dokument und einem Noncewert gebildet. Sodann wird basierend auf dem ersten Hashwert eine Antwort von einem Zeitserver, wie z.B. Roughtime-Server, empfangen. Von der Antwort des Zeitservers wird erneut ein Hashwert gebildet und basierend auf dem weiteren Hashwert eine Antwort von einem weiteren Zeitserver empfangen usw. Auf diese Weise kann eine Hashkette aus signierten Zeitangaben der mehreren Zeitserver gebildet und als Zeitstempel benutzt werden.

Die Hashkette ist vorteilhafterweise gegen nachträgliche Manipulationen geschützt.

Durch die Schritte des vorgeschlagenen Verfahrens kann somit eine bestehende Infrastruktur aus den mehreren Zeitservern, die zur Zeitauskunft bzw. Zeitsynchronisation vorgesehen ist, wie beispielsweise eine Roughtime-Infrastruktur, vorteilhafterweise zum sicheren Zeitstempeln eines digitalen Dokuments benutzt werden.

Der kryptographische Zeitstempel kann mit dem vorgeschlagenen Verfahren vorteilhafterweise als Mehrheitskonsens mehrerer Zeitserver über die Zeit gebildet werden, zu der das zu stempelnde Dokument den jeweiligen Zeitservern vorgelegt wurde. Dadurch werden Anforderungen an die Vertrauenswürdigkeit eines einzelnen Zeitservers reduziert und insbesondere ist es nicht erforderlich, dass eine Vorrichtung, die den Zeitstempel erzeugt, und eine Vorrichtung, die den Zeitstempel überprüft, demselben Zeitserver vertrauen. Zudem können anhand des Zeitstempels Fehlfunktionen eines einzelnen Zeitservers einfach entdeckt und nachgewiesen werden.

Gemäß einer Ausführungsform umfasst die digitale Signatur die Zeitangabe und/oder wird durch Signieren des aktuellen Hashwerts und der Zeitangabe gebildet.

Ein Beispiel für eine digitale Signatur des Hashwerts, die die Zeitangabe als Bestandteil der digitalen Signatur umfassen kann, ist eine digitale Signatur nach ITU-T X.509. Alternativ kann eine digitale Signatur verwendet werden, die keine Zeitangabe als Bestandteil der digitalen Signatur umfasst. In diesem Fall kann die digitale Signatur eine digitale Signatur sein, die durch Signieren eines Ergebnisses einer Verknüpfung, wie beispielsweise einer Konkatenierung, des Hashwerts und der Zeitangabe gebildet ist.

Durch das Integrieren der Zeitangabe in die digitale Signatur bzw. durch das Signieren insbesondere der Zeitangabe wird die Zeitangabe vorteilhafterweise kryptographisch abgesichert.

Gemäß einer weiteren Ausführungsform umfasst der kryptographische Zeitstempel den Noncewert und eine Abfolge der mehreren empfangenen digitalen Signaturen und der mehreren empfangenen Zeitangaben.

Die Zeitangaben können in die digitalen Signaturen integriert oder separat von diesen von dem Zeitstempel umfasst sein.

Gemäß einer weiteren Ausführungsform umfasst in jedem Schritt b4) das Bestimmen eines weiteren Hashwerts ein Erzeugen eines weiteren Noncewerts und erfolgt durch Anwenden der vorbestimmten Hashfunktion auf den weiteren Noncewert und die empfangene Antwort. Der kryptographische Zeitstempel für das digitale Dokument wird aus den mehreren Noncewerten und den mehreren empfangenen Antworten gebildet. Der krytographische Zeitstempel umfasst eine Abfolge der mehreren Noncewerte, der mehreren empfangenen digitalen Signaturen und der mehreren empfangenen Zeitangaben.

Indem jeder weitere Hashwert nicht nur aus einer jeweiligen empfangenen Antwort, sondern aus der jeweiligen empfangenen Antwort und einem weiteren Noncewert gebildet wird, werden durch eine solche Aufnahme der weiteren Noncewerte in die Hashkette vorteilhafterweise die Anforderungen an eine Kollisionsresistenz der Hashfunktion gesenkt.

Gemäß einer weiteren Ausführungsform erfolgt ein Identifizieren eines Zeitservers als unzuverlässig, falls eine in einer von dem Zeitserver erstellten Antwort umfasste Zeitangabe ein vorgegebenes Konsistenzkriterium nicht erfüllt.

Das Konsistenzkriterium kann eine Richtlinie sein, die beispielsweise regelt, um welchen Betrag die von verschiedenen Zeitservern zu einem im Wesentlichen gleichen Zeitpunkt gelieferten Zeitangaben voneinander abweichen dürfen.

Das Identifizieren unzuverlässiger Zeitserver kann an verschiedenen Stellen des vorgeschlagenen Verfahrens erfolgen, beispielsweise in Schritt b3), d.h., sobald eine Antwort von einem unzuverlässigen Zeitserver empfangen wird, beispielsweise durch Vergleichen der Antwort mit den bis dahin empfangenen Antworten anhand des Konsistenzkriteriums. In diesem Fall kann die Antwort des als unzuverlässig identifizierten Zeitservers verworfen werden und die Schritte b1) bis b3) können mit einem anderen ausgewählten Zeitserver wiederholt werden. Auf diese Weise kann vorteilhafterweise ein zuverlässiger kryptographischer Zeitstempel erstellt werden, auch wenn einer der mehreren Zeitserver unzuverlässig ist.

Alternativ kann das Identifizieren in Schritt c) erfolgen, d.h. beim Bilden des kryptographischen Zeitstempels aus den mehreren empfangenen Antworten durch Vergleichen einer jeden Antwort mit allen empfangenen Antworten anhand des Konsistenzkriteriums.

Gemäß einer weiteren Ausführungsform umfasst das vorgeschlagene Verfahren: Überprüfen der in dem in Schritt c) gebildeten kryptographischen Zeitstempel umfassten Zeitangaben unter Verwendung eines vorgegebenen Konsistenzkriteriums und Verwenden des kryptographischen Zeitstempels als vertrauenswürdigen kryptographischen Zeitstempel für das digitale Dokument, falls alle der Zeitangaben das vorgegebene Konsistenzkriterium erfüllen, oder Verwenden des kryptographischen Zeitstempels als Beweis für Unzuverlässigkeit mindestens eines der ausgewählten Zeitserver, falls mindestens eine der Zeitangaben das vorgegebene Konsistenzkriterium nicht erfüllt.

Verwenden des kryptographischen Zeitstempels als vertrauenswürdigen kryptographischen Zeitstempel für das digitale Dokument bedeutet insbesondere, dass der kryptographische Zeitstempel derart als Teil des digitalen Dokuments, verknüpft mit dem digitalen Dokument oder separat von dem digitalen Dokument gespeichert wird, dass zu einem späteren Zeitpunkt anhand des kryptographischen Zeitstempels überprüft werden kann, dass das digitale Dokument zu dem von dem kryptographischen Zeitstempel spezifizierten Zeit vorgelegen hat. Als von dem kryptographischen Zeitstempel spezifizierte Zeit kann beispielsweise die erste der mehreren von dem kryptographischen Zeitstempel umfassten Zeitangaben oder ein Mittelwert der mehreren Zeitangaben benutzt werden.

Erfüllt eine der von dem kryptoraphischen Zeitstempel umfassten Zeitangaben das Konsistenzkriterium nicht, kann der kryptographische Zeitstempel insbesondere als Beweis für die Unzuverlässigkeit des zugehörigen Zeitservers benutzt werden, der die dem Konsistenzkriterium nicht entsprechende Zeitangabe erstellt hat. Der unzuverlässige Zeitserver ist über die von ihm erzeugte digitale Signatur eindeutig identifizerbar. Der Beweis kann beispielsweise auf einem Blog, in einer Blockchain oder gemäß einem beliebigen vorgegebenen Protokoll veröffentlicht werden. Somit können vorteilhafterweise unzuverlässige Zeitserver identifiziert und im Weiteren von der Teilnahme an dem vorgeschlagenen Verfahren ausgeschlossen werden, so dass das Vertrauen in die Infrastruktur aus den mehreren Zeitservern weiter erhöht wird.

Gemäß einer weiteren Ausführungsform umfasst das vorbestimmte Konsistenzkriterium die Bedingung, dass eine zeitliche Abfolge jeweiliger Zeitangaben einer Abfolge des jeweiligen Auswählens der entsprechenden Zeitserver entspricht und/oder einer Abfolge der jeweiligen Zeitangaben in dem kryptographischen Zeitstempel entspricht.

Anders ausgedrückt kann das vorbestimmte Konsistenzkriterium gemäß der vorliegenden Ausführungsform ein monotones Ansteigen der von den Zeitservern nacheinander gelieferten Zeitangaben fordern. Dies ermöglicht eine sehr einfache Plausibilitätsprüfung der Konsistenz der Zeitangaben.

Gemäß einer weiteren Ausführungsform umfasst das vorbestimmte Konsistenzkriterium die Bedingung, dass eine Zeitangabe um nicht mehr als eine vorbestimmte erste Toleranzschwelle von mindestens einer der mehreren Zeitangaben abweicht.

Beispielsweise kann die Bedingung lauten, dass eine jeweilige Zeitangabe um nicht mehr als die vorbestimmte erste Toleranzschwelle von einer in einer Abfolge der Zeitangaben in dem kryptographischen Zeitstempel vorhergehenden Zeitangabe abweicht. Alternativ kann die Bedingung lauten, dass die jeweilige Zeitangabe um nicht mehr als die vorbestimmte erste Toleranzschwelle von der ersten der Zeitangaben oder von einem Mittelwert einiger oder aller der Zeitangaben in dem kryptographischen Zeitstempel abweicht.

Mit der ersten Toleranzschwelle lässt sich vorteilhafterweise eine maximal zulässige Abweichung der Zeitangaben der Zeitserver voneinander spezifizieren. Die maximal zulässige Abweichung kann je nach Anforerungen des konkreten Anwendungsfalls gewählt werden und beispielsweise maximal 10 Minuten betragen.

Gemäß einer weiteren Ausführungsform umfasst das vorgeschlagene Verfahren: vor einem jeweiligen Schritt b4), Messen einer lokalen Zeit; in einem jeweiligen Schritt b4), Bestimmen des weiteren Hashwerts durch Anwenden der vorbestimmten Hashfunktion auf die empfangene Antwort und die gemessene lokale Zeit; in Schritt c), Bilden des kryptographischen Zeitstempels ferner aus den in den Schritten b4) gemessenen lokalen Zeiten. Hierbei umfasst der krytographische Zeitstempel den Noncewert und eine Abfolge der mehreren empfangenen digitalen Signaturen, der mehreren empfangenen Zeitangaben und der mehreren gemessenen lokalen Zeiten. Das vorbestimmte Konsistenzkriterium umfasst die Bedingung, dass eine Differenz zwischen je zwei der Zeitangaben um nicht mehr als eine vorbestimmte zweite Toleranzschwelle von einer Differenz zwischen den entsprechenden zwei der gemessenen lokalen Zeiten abweicht.

Die lokale Zeit ist insbesondere eine Zeit eines lokalen Zeitgebers, wie eines Systemtakts einer Vorrichtung, die das vorgeschlagene Verfahren durchführt. Es kann sich um eine synchronisierte, absolute Zeit oder um eine nicht synchronisierte, relative Zeit handeln, wie beispielsweise eine Zeit seit dem Einschalten der Vorrichtung, die das vorgeschlagene Verfahren durchführt. Durch Aufnahme der lokalen Zeiten in den kryptographischen Zeitstempel kann zu späteren Zeiten nachvollzogen werden, wie viel Zeit zwischen dem Empfangen zweier Zeitangaben, die den kryptographischen Zeitstempel bilden, verstrichen ist. Die Bedingung des vorbestimmten Konsistenzkriteriums gemäß der vorliegenden Ausführungsform kann spezifizieren, dass die verstrichene Zeit im Wesentlichen einer z.B. durch eine Signalübermittlung und Verarbeitungszeit bedingten Differenz zwischen den zwei Zeitangaben entsprechen sollte. Die vorbestimmte zweite Toleranzschwelle kann insbesondere niedriger als die erste Toleranzschwelle gewählt werden. Auf diese Weise können die von den mehreren Zeitservern gelieferten Zeitangaben äußerst präzise auf Konsistenz geprüft werden, und diese Konsistenz kann zu einem späteren Zeitpunkt durch Prüfen der von dem kryptographischen Zeitstempel umfassten lokalen Zeiten und digitalen Signaturen nachvollzogen werden.

Gemäß einer weiteren Ausführungsform erfolgt in den jeweiligen Schritten b1) das Auswählen eines der mehreren Zeitserver gemäß einer vorgebenen Reihenfolge oder zufällig.

Werden gemäß einer vorgegebenen Reihenfolge nacheinander beispielsweise alle der mehreren Zeitserver ausgewählt, können insbesondere alle Zeitserver berücksichtigt werden und somit kann vorteilhafterweise ein maximal vertrauenswürdiger kryptoraphischer Zeitstempel erstellt werden. Wird jedoch die Anzahl der für das vorgeschlagene Verfahren verfügbaren Zeitserver sehr groß, kann durch zufällige Auswahl einiger der mehreren Zeitserver die Länge des kryptographsichen Zeitstempels auf eine vorbestimmte Länge begrenzt werden, um vorteilhafterweise Rechenzeit zu sparen. In Varianten kann im Laufe des wiederholten Durchführens des Schritts b1) bei dem vorgeschlagenen Verfahren auch ein selber Zeitserver mehrfach ausgewählt werden und auf diese Weise vorteilhafterweise auf Konsistenz der von ihm gelieferten Zeitangaben geprüft werden, d.h., es kann insbesondere geprüft werden, ob die Zeitdifferenz zwischen zwei von demselben Zeitserver gelieferten Zeitangaben im Wesentlichen bzw. exakt der verstrichenen Zeit zwischen einem jeweiligen Auswählen desselben Zeitservers entspricht.

Gemäß einer weiteren Ausführungsform umfasst das vorgeschlagene Verfahren: in Schritt b1) Auswählen mehrerer der mehreren Zeitserver; in Schritt b2) Übermitteln des aktuellen Hashwerts an jeden der mehreren ausgewählten Zeitserver; in Schritt b3) Empfangen einer jeweiligen Antwort von jedem der ausgewählten Zeitserver, die jeweils eine digitale Signatur des aktuellen Hashwerts und eine Zeitangabe umfasst; und in Schritt b4) Bestimmen des weiteren Hashwerts durch Anwenden der vorbestimmten Hashfunktion auf die empfangenen Antworten der mehreren ausgewählten Zeitserver.

Bei dem vorgeschlagenen Verfahren gemäß der vorliegenden Ausführungsform werden parallel mehrere Zeitserver abgefragt, und der kryptographische Zeitschlüssel wird demgemäß als Hashkette aus Blöcken von Antworten jeweils mehrerer Zeitserver gebildet. Durch eine derartige Parallelisierung kann eine große Anzahl von Zeitservern effizient abgefragt werden. So kann vorteilhafterweise die für die Erstellung eines kryptographischen Zeitstempels unter Verwendung einer großen Anzahl von Zeitservern benötigte Zeitdauer reduziert werden.

Gemäß einer weiteren Ausführungsform umfasst bei dem vorgeschlagenen Verfahren in einem jeweiligen Schritt b3) die Antwort ferner einen einen Geltungsbereich der digitalen Signatur beschreibenden Identifier, und die digitale Signatur ist eine digitale Signatur einer Kombination aus dem aktuellen Hashwert und dem den Geltungsbereich der digitalen Signatur beschreibenden Identifier. Hierbei umfasst der krytographische Zeitstempel den Noncewert und eine Abfolge der mehreren empfangenen digitalen Signaturen, der mehreren empfangenen Zeitangaben und der mehreren empfangenen Identifier.

Insbesondere kann der den Geltungsbereich der digitalen Signatur beschreibende Identifier eine digitale Angabe sein, die beschreibt, dass die digitale Signatur über die Zeitangabe den Zeitpunkt bestätigt, zu dem die signierten Daten vorgelegt wurden, jedoch keine Aussage über die Gültigkeit der signierten Daten trifft. Auf diese Weise kann verhindert werden, dass die digitalen Signaturen der mehreren Zeitserver zu anderen Zwecken als zum Zeitstempeln missbraucht bzw. fehlinterpretiert werden. Der den Geltungsbereich der digitalen Signatur beschreibende Identifier kann über eine Scope Extension in die digitale Signatur integriert sein oder als eigenes Datenelement in der Antwort umfasst sein. Ist der den Geltungsbereich der digitalen Signatur beschreibende Identifier als eigenes Datenelement in der Antwort umfasst, so kann die digitale Signatur eine digitale Signatur sein, die durch Signieren des aktuellen Hashwerts und des Identifiers gebildet ist. Der Identifier kann ein AoR-Identifier (Area of Responsibility) gemäß IEC 62351-8 sein.

Weiterhin wird ein Computerprogrammprodukt vorgeschlagen, welches auf einer programmgesteuerten Einrichtung die Durchführung des wie oben erläuterten Verfahrens veranlasst.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen.

Gemäß einem weiteren Aspekt wird eine Vorrichtung zum Erzeugen eines kryptographischen Zeitstempels für ein digitales Dokument unter Verwendung mehrerer Zeitserver vorgeschlagen. Die Vorrichtumg weist auf: a) eine erste Einheit zum Erzeugen eines Noncewerts und zum Bestimmen eines aktuellen Hashwerts durch Anwenden einer vorbestimmten Hashfunktion auf den Noncewert und das digitale Dokument; b) eine zweite Einheit zum wiederholten Durchführen der folgenden Schritte: b1) Auswählen eines der mehreren Zeitserver; b2) Übermitteln des aktuellen Hashwerts an den ausgewählten Zeitserver; b3) Empfangen einer von dem ausgewählten Zeitserver erstellten Antwort, die eine digitale Signatur des aktuellen Hashwerts und eine Zeitangabe umfasst; b4) Bestimmen eines weiteren Hashwerts durch Anwenden der vorbestimmten Hashfunktion auf die empfangene Antwort und b5) Verwenden des weiteren Hashwerts als den aktuellen Hashwert; und c) eine dritte Einheit zum Bilden des kryptographischen Zeitstempels für das digitale Dokument aus dem Noncewert und den mehreren empfangenen Antworten.

Die für das vorgeschlagene Verfahren beschriebenen Ausführungsformen und Merkmale gelten für die vorgeschlagene Vorrichtung entsprechend.

Die jeweilige Einheit, zum Beispiel die Recheneinheit oder die Steuerungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform wird eine Vorrichtung zum Protokollieren von Bedienerentscheidungen und/oder maschinellen Entscheidungen vorgeschlagen, die dazu eingerichtet ist, digitale Dokumente mit nach einem vorgeschlagenen Verfahren erzeugten kryptographischen Zeitstempeln zu versehen, wobei die digitalen Dokumente Protokolle über Bedienerentscheidungen und/oder maschinelle Verträge umfassen.

Bei den Bedienerentscheidungen kann es sich beispielsweise um Entscheidungen handeln, die ein menschlicher Bediener in einer sicherheitskritischen Anlage, wie beispielsweise einem Stellwerk oder einem Atomkraftwerk, trifft.

Ein maschineller Vertrag kann ein Dokument sein, welches beispielsweise in einer Automatisierungsanlage eine Vereinbarung zwischen autonomen Einrichtungen über die Nutzung bzw. Bereitstellung von Produktionskapazitäten oder dergleichen dokumentiert.

Im Falle von Fehlfunktionen oder sicherheitskritischen Vorfällen kann anhand der mit dem vorgeschlagenen Verfahren erstellten Zeitstempel vorteilhafterweise nachvollzogen werden, welcher Bediener oder welcher automatisierte Vorgang ursächlich Schuld an dem Vorfall bzw. der Fehlfunktion hat.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Fig. 1 veranschaulicht Schritte eines vorgeschlagenen Verfahrens.

Fig. 2 veranschaulicht die Durchführung eines Verfahrens gemäß einem ersten Ausführungsbeispiel.

Fig. 3 zeigt eine Datenstruktur eines kryptographischen Zeitstempels gemäß dem ersten Ausführungsbeispiel.

Fig. 4 veranschaulicht eine Weiterbildung des ersten Ausführungsbeispiels.

Fig. 5 veranschaulicht die Durchführung eines Verfahrens gemäß einem zweiten Ausführungsbeispiel.

Fig. 6 zeigt eine Datenstruktur eines kryptographischen Zeitstempels gemäß dem zweiten Ausführungsbeispiel.

In den Figuren sind gleiche oder funktionsgleiche Elemente mit denselben Bezugszeichen versehen worden, sofern nichts anderes angegeben ist.

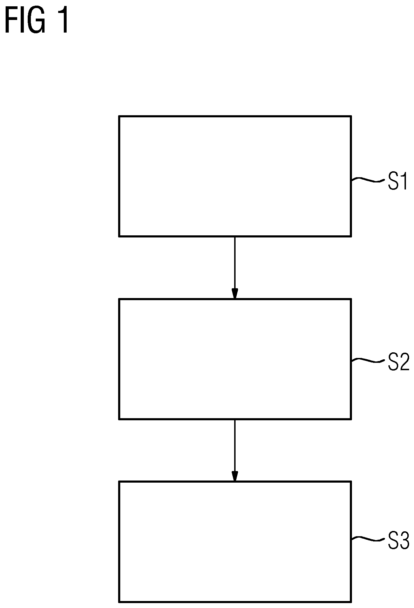

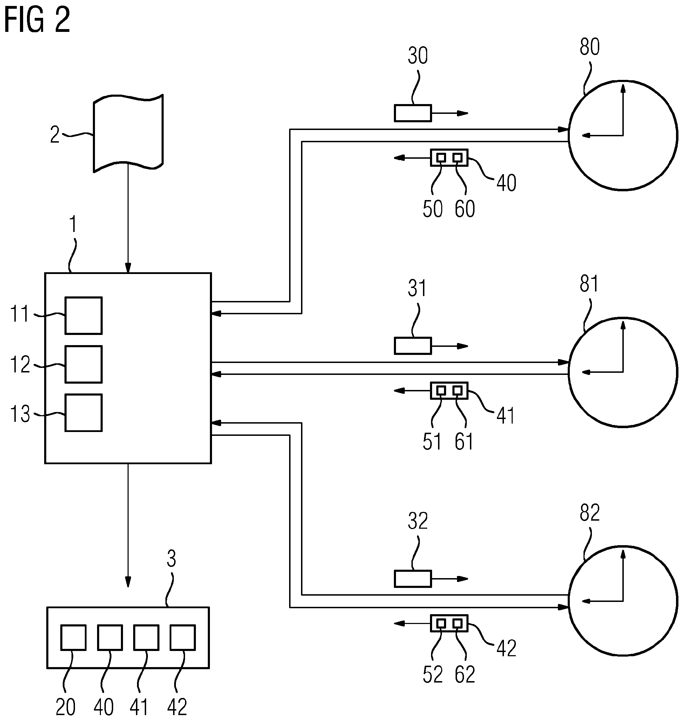

Ein erstes Ausführungsbeispiel wird nun anhand der Fig. 1 und 2 beschrieben. Fig. 1 veranschaulicht die Abfolge der Schritte des vorgeschlagenen Verfahrens. Fig. 2 zeigt ein System, in dem das Verfahren gemäß dem ersten Ausführungsbeispiel durchgeführt wird.

Das System aus Fig. 2 umfasst eine Vorrichtung 1 zum Erzeugen eines kryptografischen Zeitstempels - im Weiteren als "Zeitstempelvorrichtung 1" bezeichnet. Die Zeitstempelvorrichtung 1 umfasst eine erste Einheit 11, eine zweite Einheit 12 und eine dritte Einheit 13. Das System aus Fig. 2 umfasst ferner mehrere Zeitserver 80, 81, 82, bei denen es sich um Roughtime-Server handelt. Die Zeitstempelvorrichtung 1 kann mit den Zeitservern 80, 81, 82 über ein Netzwerk (nicht gezeigt), wie ein LAN, ein WAN oder das öffentliche Internet, kommunizieren. Der Zeitstempelvorrichtung 1 wird ein digitales Dokument 2 bereitgestellt. Die Zeitstempelvorrichtung 1 erzeugt nach dem Verfahren gemäß dem ersten Ausführungsbeispiel einen kryptographischen Zeitstempel 3, wie nachstehend beschrieben.

In Schritt S1 (vgl. Fig. 1) erzeugt die erste Einheit 11 der Zeitstempelvorrichtung 1 mittels eines Pseudozufallszahlengenerators (nicht gezeigt) einen Noncewert 20, konkateniert den Noncewert 20 mit dem Dokument 2 und bestimmt durch Anwenden einer Hashfunktion h(x), z.B. einen SHA-256 oder Salsa20, auf das Ergebnis des Konkatenierens einen ersten Hashwert 30 als Hashwert $h_0$ nach der Formel I:

$$h_0 = h(N|m) \tag{I}$$

Hierbei ist N der Noncewert 20, m das Dokument 2, und der senkrechte Strich bezeichnet den Konkatenationsoperator, d.h., N|m bezeichnet ein Aneinanderhängen des Noncewerts N mit dem Dokument m.

In Schritt S2 wählt die zweite Einheit 12 der Zeitstempelvorrichtung 1 den ersten Zeitserver 80 aus und übermittelt den ersten Hashwert 30 als aktuellen Hashwert an den ersten Zeitserver 80.

Der Zeitserver 80 ist ein Roughtime-Server und behandelt gemäß dem Roughtime-Protokoll den von der Zeitstempelvorrichtung 1 empfangenen Hashwert als Noncewert gemäß dem Roughtime-Protokoll. Mit anderen Worten ist es nicht erforderlich, dass der Zeitserver 80 speziell für die Durchführung des vorgeschlagenen Verfahrens vorbereitet ist. Für die Funktion des Zeitservers 80 ist es somit unerheblich, dass der an von der Zeitstempelvorrichtung übermittelte Wert ein Hashwert 30 ist, der gehashte Informationen über ein zu stempelndes Dokument 2 transportiert. Gemäß dem Roughtime-Protokoll erzeugt der Zeitserver 80 als Reaktion auf das Übermitteln des Werts 30 eine Zeitangabe 50, die eine aktuelle Systemzeit $t_0$ des Zeitservers 80 bezeichnet, konkateniert den Wert 30 mit der Zeitangabe 50 und signiert die solchermaßen konkatenierte Datenfolge, um eine digitale Signatur 60 zu erzeugen. Mit anderen Worten berechnet der Zeitserver 80 die digitale Signatur 60 als digitale Signatur $s_0$ nach der Formel $S_0 = Sig(h_0|t_0)$. Daraufhin übermittelt der Zeitserver die Antwort 40, die die Zeitangabe 50 und die digitale Signatur. 60 als konkatenierte Datenfolge $t_0|s_0$ umfasst.

Die zweite Einheit 12 der Zeitstempelvorrichtung empfängt die Antwort 40 von dem ersten Zeitserver 80.

Daraufhin wendet die zweite Einheit 12 die Hashfunktion h(x) auf die empfangene Antwort an und bestimmt so einen zweiten Hashwert 31 als Hashwert $h_1$ nach der folgenden Formel II:

$$h_1 = h(t_0|s_0) = h(t_o|Sig(h_0|t_0)) \tag{II}$$

wobei $t_0$ die erste Zeitangabe 50, $s_0$ die erste digitale Signatur 60 und $h_0$ den ersten Hashwert 30 bezeichnet.

Die zweite Einheit 12 wählt daraufhin einen zweiten Zeitserver 81 aus und überträgt den solchermaßen erhaltenen zweiten Hashwert 31 an den zweiten Zeitserver 81, empfängt eine Antwort 41, die eine zweite Zeitangabe 51 und eine zweite digitale Signatur 61 umfasst, wobei die zweite digitale Signatur 61 eine digitale Signatur $s_1$ des zweiten Hashwerts 31 und der zweiten Zeitangabe 51 gemäß der Formel $s_1 = Sig(h_1|t_1)$ ist.

Daraufhin bestimmt die zweite Einheit 12 einen dritten Hashwert 32 als Hashwert $h_2$ nach der Formel III:

$$h_2 = h(t_1|s_1) = h(t_1, Sig(h_1|t_1)) \tag{III}$$

Hierbei ist $t_1$ die zweite Zeitangabe 51, $s_1$ die zweite digitale Signatur 61, $h_2$ der dritte Hashwert 32 und $h_1$ der zweite Hashwert 31.

Die zweite Einheit 12 wählt einen dritten Zeitserver 82 aus und überträgt den solchermaßen erhaltenen dritten Hashwert 31 an den dritten Zeitserver 82, empfängt eine Antwort 42, die eine dritte Zeitangabe 52 und eine dritte digitale Signatur 62 des dritten Hashwerts 32 und der dritten Zeitangabe 52 umfasst.

Die zweite Einheit 12 hat somit drei Antworten 40, 41, 42 von drei Zeitservern 80, 81, 82 empfangen, wobei eine jeweilige Antwort 40, 41, 42 jeweils eine Zeitangabe 50, 51, 52 und einen digitale Signatur 60, 61, 62 umfasst und es sich bei der jeweiligen digitalen Signatur 60, 61, 62 um eine digitale Signatur einer Konkatenation aus einem zugehörigen Hashwert 30, 31, 32 und einer zugehörigen Zeitangabe 50, 51, 52 handelt.

Allgemein ausgedrückt bestimmen sich die Hashwerte 30, 31, 32 und die digitalen Signaturen 60, 61, 62 nach den Formeln IV-VI:

$$h_0 = h(N|m) \qquad\qquad\qquad (IV)$$

$$s_i = Sig(h_i|t_i), \text{ mit } i \geq 0 \qquad\qquad (V)$$

$$h_i = h(t_{i-1}|s_{i-1}) = h(t_{i-1}|Sig(h_{i-1}|t_{i-1})), \text{ mit } i \geq 1. \qquad (VI)$$

Hierbei sind $h_i$ die Hashwerte 30, 31, 32 und $s_i$ die digitalen Signaturen 60, 61, 62.

Es sei angemerkt, dass durch die Rekursion in Formel VI eine Hashkette ausgebildet wird.

In Schritt S3 bildet die dritte Einheit 13 den kryptographischen Zeitstempel 3 für das digitale Dokument 2 aus dem von der ersten Einheit 11 erzeugten Noncewert 20 (N in den vorstehenden Formeln I und IV) und den empfangenen Antworten 40, 41, 42. Der kryptographische Zeitstempel 3 wird von der Zeitstempelvorrichtung 1 ausgegeben, und das Verfahren gemäß dem ersten Ausführungsbeispiel endet.

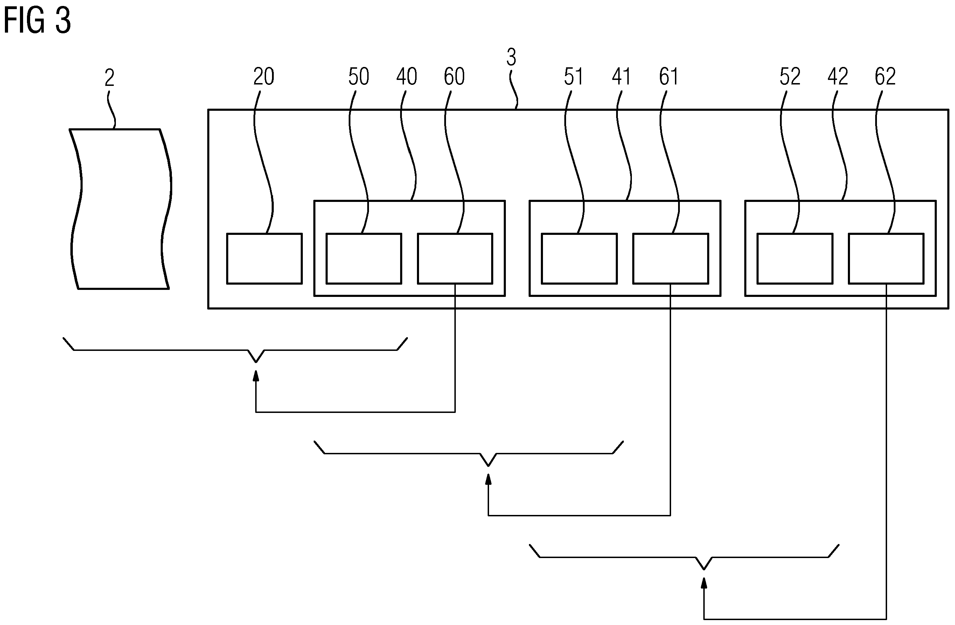

Fig. 3 zeigt das Dokument 2 und den kryptographischen Zeitstempel 3 und veranschaulicht dessen Datenstruktur. Der kryptographische Zeitstempel 3 umfasst den Noncewert 20 (N in den Formeln I und IV) und die mehreren Antworten 40, 41, 42. Jede der Antworten 40, 41, 42 umfasst jeweils eine Zeitangabe 50, 51, 52 und eine digitale Signatur 60, 61, 62. Die Pfeile und geschweiften Klammern in Fig. 3 veranschaulichen, auf welche Daten sich die jeweiligen digitalen Signaturen 60, 61, 62 beziehen. Die erste digitale Signatur 60 ist gemäß Formel V eine digitale Signatur des ersten Hashwerts 30 (vgl. Fig. 2), welcher gemäß Formel IV durch Anwenden der Hashfunktion auf das Dokument 2 und den Noncewert 20 bestimmt wurde, sowie der ersten Zeitangabe 50. Die zweite digitale Signatur 61 ist gemäß Formel V eine digitale Signatur des zweiten Hashwerts 31, welcher gemäß Formel VI durch Anwenden der Hashfunktion auf die erste Antwort 40 bestimmt wurde, sowie der zweiten Zeitangabe 51. Die dritte digitale Signatur 62 ist gemäß Formel V eine digitale Signatur des dritten Hashwerts 32, welcher durch Formel VI durch Anwenden der Hashfunktion auf die zweite Antwort 41 bestimmt wurde, sowie der dritten Zeitangabe 52. Durch die veranschaulichten Rückbezuge der jeweiligen digitalen Signaturen in den jeweiligen Antworten auf die Hashwerte der jeweils vorherigen Antworten entsteht eine manipulationsgeschützte Hashkette.

Es sei angemerkt, dass gemäß dem Ausführungsbeispiel die Hashwerte 30, 31, 32 selbst nicht Teil des kryptographischen Zeitstempels 3 sind, da sie bei gegebenem Dokument 2 und gegebenem Zeitstempel 3 mit seinen Bestandteilen Noncewert 20 und Antworten 40, 41, 42 aus diesen anhand der SHA256-Hashfunktion jederzeit wieder berechnet werden können.

Es sei ferner angemerkt, dass der Noncewert 20 auch weggelassen werden kann, jedoch verringert der Noncewert 20 die Wahrscheinlichkeit von Kollisionen der Hashfunktion und verhindert vorteilhafterweise überdies, dass für ein vorgegebenes Dokument 2 der Inhalt des Zeitstempels 3 für eine vorgegebene Zeit t vorhergesagt werden kann.

In einer Weiterbildung des ersten Ausführungsbeispiels prüft die Zeitstempelvorrichtung 1 die Zeitangaben 50, 51, 52 des Zeitstempels 3 anhand eines vorgegebenen Konsistenzkriteriums. In einer Variante der Weiterbildung überprüft die Zeitstempelvorrichtung 1, ob die zeitliche Abfolge der Zeitangaben 50, 51, 52 der Reihenfolge entspricht, in der die entsprechenden Zeitserver 80, 81, 82 ausgewählt wurden, d.h. der Reihenfolge, in der die Zeitangaben 50, 51, 52 in dem Zeitstempel 3 auftreten. In einer weiteren Variante der Weiterbildung überprüft die Zeitstempelvorrichtung 1, ob die Zeitangaben 50, 51, 52 um nicht mehr als eine vorbestimmte Toleranzschwelle von beispielsweise 10 Minuten voneinander abweichen, d.h. beispielsweise von einem Mittelwert der Zeitangaben 50, 51, 52 oder von der ersten Zeitangabe 50. Wird bei diesen Prüfungen eine der Zeitangaben 50, 51, 52 als inkonsistent mit dem Zeitstempel 3, d.h. mit den übrigen Zeitangaben 50, 51, 52 des Zeitstempels 3, erkannt, wird der zugehörige Zeitserver 80, 81, 82, von dem die inkonsistente Zeitangabe 50, 51, 52 empfangen wurde, als unzuverlässig identifiziert. In diesem Fall verwendet die Zeitstempelvorrichtung 1 den Zeitstempel 3 als kryptographischen Beweis für die Unzuverlässigkeit des unzuverlässigen Zeitservers. Die Zeitstempelvorrichtung 1 verbreitet dazu den Zeitstempel 3 beispielsweise gemäß einem Peer-to-Peer-Protokoll, so dass andere Zeitstempelvorrichtungen Gelegenheit haben, von dem kryptographischen Beweis Kenntnis zu nehmen.

Hat die Zeitstempelvorrichtung 1 einen der Zeitserver 80, 81, 82 als unzuverlässig identifiziert, oder empfängt die Zeitstempelvorrichtung 1 selbst über das Peer-to-Peer-Protokoll einen entsprechenden kryptographischen Beweis über die Unzuverlässigkeit eines der Zeitserver 80, 81, 82, so hat dies zur Folge, dass die Zeitstempelvorrichtung 1 bei einer wiederholten Durchführung des Verfahrens den unzuverlässigen Zeitserver unter den Zeitserver 80, 81, 82 nicht auswählt.

Wurde hingegen keiner der Zeitserver 80, 81, 82 als unzuverlässig identifiziert, wird der Zeitstempel 3 als Zeitstempel für das digitale Dokument 2 benutzt, wie nachstehend beschrieben.

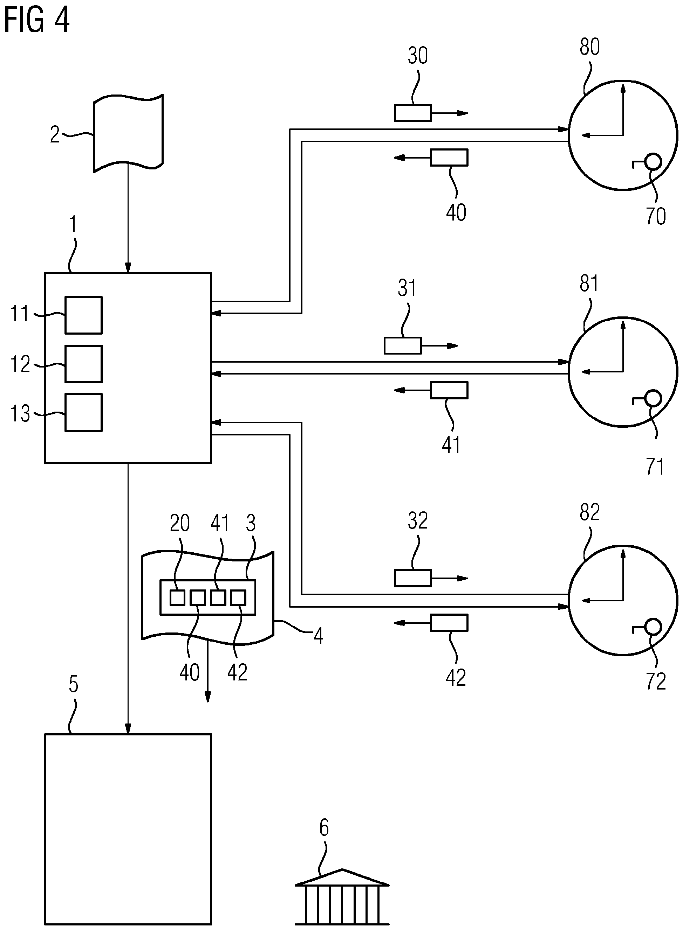

Fig. 4 zeigt eine weitere Weiterbildung des ersten Ausführungsbeispiels, in dem aus dem digitalen Dokument 2 und dem kryptographischen Zeitstempel 3 ein zeitgestempeltes digitales Dokument 4 gebildet wird, welches zu einem beliebigen späteren Zeitpunkt einer Vorrichtung 5 zum Prüfen von Zeitstempeln vorgelegt wird, die den Zeitstempel 3 des zeitgestempelten digitalen Dokuments 4 prüft, wie nachstehend beschrieben.

Jeder der Zeitserver 80, 81, 82 gemäß der Weiterbildung des ersten Ausführungsbeispiels in Fig. 4 verfügt über einen privaten Schlüssel 70, 71, 72, der ausschließlich dem jeweiligen Zeitserver 80, 81, 82 bekannt ist. Die Zeitserver 80, 81, 82 nutzen ihren jeweiligen privaten Schlüssel 70, 71, 72 zum Erzeugen der digitalen Signaturen 60, 61, 62 für die Antworten 40, 41, 42, wie vorstehend beschrieben. Ein jeweiliger privater Schlüssel 70, 71, 72 ist Teil eines jeweiligen Public-Private-Schlüsselpaars, d.h., zu den privaten Schlüssen 71, 72, 73 existieren entsprechende öffentliche Schlüssel (nicht gezeigt), anhand derer die digitalen Signaturen 60, 61, 62 überprüft werden können.

Die in Fig. 4 gezeigte Vorrichtung 5 zum Prüfen von Zeitstempeln prüft den in Fig. 3 im Detail gezeigten Zeitstempel 3 des zeitgestempelten digitalen Dokuments 4 wie folgt: Zunächst berechnet die Vorrichtung 5 aus dem Dokument 2, welches einem Abschnitt des zeitgestempelten Dokuments 4 ohne den Zeitstempel 3 entspricht, und dem Noncewert 20 den ersten Hashwert 30 nach Formel IV und verwendet diesen als aktuellen Hashwert.

Sodann prüft die Vorrichtung 5 die erste Antwort 40, indem sie prüft, ob es sich bei der ersten digitalen Signatur 60 aus der Antwort 40 des ersten Zeitservers 80 um eine gültige digitale Signatur von einer Konkatenation des aktuellen Hashwerts mit der Zeitangabe 50 handelt. Diese Prüfung erfolgt anhand des zu dem privaten Schlüssel 70 des ersten Zeitservers 80 zugehörigen öffentlichen Schlüssels. Der öffentliche Schlüssel kann in der Vorrichtung 5 hinterlegt sein, wodurch ein Vertrauensverhältnis zwischen der Vorrichtung 5 und dem Zeitserver 80 entsteht. Der öffentliche Schlüssel kann auch Teil eines Zertifikats des Zeitservers 80 sein, welches die Vorrichtung 5 seinerseits anhand des öffentlichen Schlüssels einer Zertifizierungsstelle 6 prüft, mit der sie in einem Vertrauensverhältnis steht. Handelt es sich bei der digitalen Signatur 60 um keine gültige digitale Signatur des ersten Zeitservers 80, so wird der Zeitstempel 3 als ungültig betrachtet. Andernfalls bestimmt die Vorrichtung 5 aus der Antwort 40 den zweiten Hashwert 31 nach Formel IV.

Sodann prüft die Vorrichtung 5 die weiteren Antworten 41, 42 auf analoge Weise wie die erste Antwort 40.

Es sei angemerkt, dass es vorteilhafterweise nicht erforderlich ist, dass die Vorrichtung 5 alle öffentlichen Schlüssel aller an der Erstellung des Zeitstempels 3 involvierten Zeitserver 80, 81, 82 kennt bzw. ihnen vertraut. Kennt die Vorrichtung einen der öffentlichen Schlüssel eines der Zeitserver 80, 81, 82 nicht oder vertraut sie ihm nicht, so kann sie nicht bestimmen, ob die zugehörige digitale Signatur 60, 61, 62 gültig oder ungültig ist, sie kann aber dennoch mit der Prüfung des Zeitstempels fortfahren und den nächsten aktuellen Hashwert aus der die digitale Signatur 60, 61, 62 umfassenden Antwort 40, 41, 42 bestimmen. Für eine erfolgreiche Prüfung des Zeitstempels 3 ist es ausreichend, wenn die Vorrichtung 5 mindestens einen der öffentlichen Schlüssel eines der Zeitserver 80, 81, 82 kennt und mindestens eine der digitalen Signaturen 60, 61, 62 aus dem Zeitstempel 3 als gültig verifizieren kann und keine der digitalen Signaturen 60, 61, 62 als ungültig verifiziert. Somit ist es insbesondere nicht erforderlich, dass die überprüfende Vorrichtung 5 allen oder denselben Zeitservern 80, 81, 82 vertraut wie die Zeitstempelvorrichtung 3.

Sofern die Prüfung ergeben hat, dass alle digitalen Signaturen 60, 61, 62 gültig sind, für welche die Vorrichtung 5 die zugehörigen öffentlichen Schlüssel 70, 71, 72 kennt und ihnen vertraut, überprüft die Vorrichtung 5 die Zeitangaben 50, 51, 52 auf dieselbe Weise auf Konsistenz, wie dies vorstehend bereits für eine Weiterbildung der Zeitstempelvorrichtung 1 beim Erzeugen des kryptographischen Zeitstempels 3 beschrieben wurde. Sind die Zeitangaben 50, 51, 52 konsistent, bestimmt die Vorrichtung 5, dass der Zeitstempel gültig ist, und bestimmt anhand der Zeitangaben 50, 51, 52 eine Zeit, zu der das zeitgestempelte Dokument 4 ursprünglich zur Zeitstempelung vorgelegt wurde. In einer Variante wird der Mittelwert der Zeitangaben 50, 51, 52 als die Zeit bestimmt, in einer anderen Variante die Zeit der ersten Zeitangabe 50.

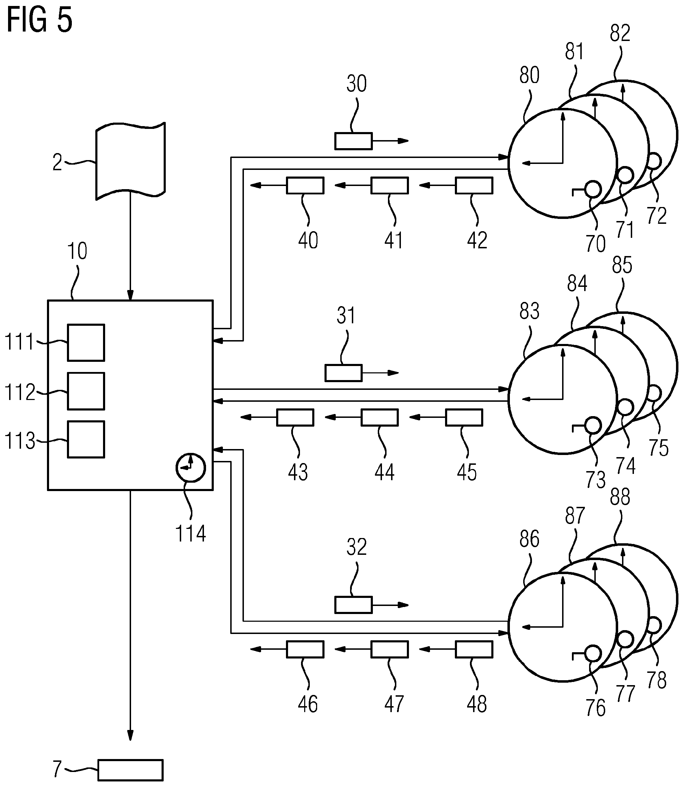

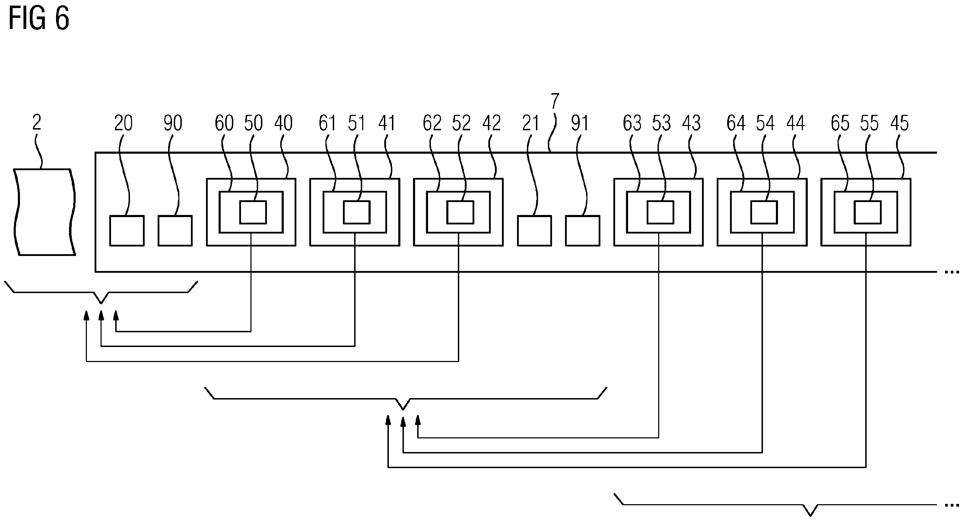

Im Folgenden wird ein zweites Ausführungsbeispiel für das vorgeschlagene Verfahren und die vorgeschlagene Zeitstempelvorrichtung beschrieben. Fig. 5 veranschaulicht die Durchführung eines Verfahrens gemäß einem zweiten Ausführungsbeispiel, und Fig. 6 zeigt eine Datenstruktur eines kryptographischen Zeitstempels 7 gemäß dem zweiten Ausführungsbeispiel.

Das Verfahren gemäß dem zweiten Ausführungsbeispiel ähnelt dem Verfahren gemäß dem ersten Ausführungsbeispiel mit folgenden Unterschieden:

In Fig. 5 sind insgesamt neun Zeitserver 80-88 mit zugehörigen privaten Schlüsseln 70-78 gezeigt. Diese sind in eine Gruppe erste Zeitserver 80, 81, 82, eine Gruppe zweite Zeitserver 83, 84, 85 und eine Gruppe dritter Zeitserver 86, 87, 88 sortiert. Die Zuteilung eines jeweiligen Zeitservers in eine der Gruppen sowie die Reihenfolge der Zeitserver 80-88 innerhalb der Gruppen wird von der Zeitstempelvorrichtung 1 bei dem Verfahren gemäß dem zweiten Ausführungsbeispiel jeweils zufällig unter Verwendung eines Pseudozufallsgenerators bestimmt. Die Zugehörigkeit eines Zeitservers 80-88 zu einer der Gruppen bedingt keine geografische Nähe zu den anderen Zeitservern 80-88 derselben Gruppe, es handelt sich somit um logische und nicht um physikalische Gruppen.

Die Zeitstempelvorrichtung 10 gemäß dem zweiten Ausführungsbeispiel weist neben der ersten bis dritten Einheit 111, 112, 113 weiterhin einen lokalen Zeitgeber 114 auf, der zum Messen einer lokalen Zeit eingerichtet ist.

In Schritt S1 (vgl. Fig. 1) erzeugt die erste Einheit 111 der Zeitstempelvorrichtung 10 den Noncewert 20, bezieht von dem lokalen Zeitgeber 114 eine lokale Zeit (90 in Fig. 6), konkateniert den Noncewert 20 mit der lokalen Zeit (90 in Fig. 6) und dem Dokument 2 und bestimmt durch Anwenden einer SHA256-Hashfunktion h(x) auf das Ergebnis des Konkatenierens den ersten Hashwert 30 nach der Formel VII:

$$h_0 = h(N_0|l_0|m) \tag{VII}$$

Hierbei ist $N_0$ der Noncewert 20, $l_0$ die lokale Zeit (90 in Fig. 6) und m das Dokument 2.

In Schritt S2 wählt die zweite Einheit 112 der Zeitstempelvorrichtung 10 die mehreren ersten Zeitserver 80, 81, 82 aus und überträgt den ersten Hashwert 30 an jeden der ersten Zeitserver 80, 81, 82. Dementsprechend empfängt die Einheit 12 von jedem der ersten Zeitserver 80, 81, 82 eine jeweilige Antwort 40, 41, 42. Jede der Antworten 40, 41, 42 umfasst eine digitale Signatur 60, 61, 62 (vgl. Fig. 6) des Hashwerts 30. Gemäß dem zweiten Ausführungsbeispiel handelt es sich bei den digitalen Signaturen 60-68 jeweils um digitalen Signaturen gemäß ITU-T X.509, wobei eine jeweilige digitale Signatur 60-68 jeweils eine Zeitangabe 50-58 als Bestandteil der jeweiligen digitalen Signatur 60-68 umfasst. Ferner umfasst eine jeweilige digitale Signatur 60-68 auch einen Identifier, den Geltungsbereich der digitalen Signatur beschreibt, indem er angibt, das es sich um eine digitale Signatur handelt, deren Aussage auf die Zeitangabe begrenzt ist.

Daraufhin erzeugt die zweite Einheit 112 einen weiteren Noncewert 21, bezieht von dem lokalen Zeitgeber 114 eine weitere lokale Zeit 91 (vgl. Fig. 6), konkateniert den weiteren Noncewert 21 mit der weiteren lokalen Zeit 91 (vgl. Fig. 6) und den empfangenen Antworten 40, 41, 42 und wendet die SHA256-Hashfunktion h(x) auf das Ergebnis des Konkatenierens an. So bestimmt die zweite Einheit 112 einen zweiten Hashwert 31 nach der folgenden Formel VIII:

$$h_1 = h(N_1|l_1|Sig_{t0}(h_0)|Sig_{t1}(h_0))|Sig_{t2}(h_0))) \tag{VIII}$$

Hierbei bezeichnet $h_1$ den zweiten Hashwert 31, $h_0$ den ersten Hashwert 30, $N_1$ den weiteren Noncewert 21, $Sig_{t0}(h_0)$ eine die erste Zeitangabe 50 umfassende digitale Signatur des ersten Hashwerts 30, d.h. die Antwort des ersten Zeitservers 80, und $Sig_{t1}(h_0)$ und $Sig_{t2}(h_0)$ analog dazu die Antworten des zweiten 81 bzw. dritten Zeitservers 82.

Die Zeitstempelvorrichtung 10 wählt daraufhin die zweiten Zeitserver 83, 84, 85 aus, überträgt den Hashwert 31 an die jeweiligen zweiten Zeitserver 83, 84, 85, empfängt von jedem der zweiten Zeitserver 83, 84, 85 eine Antwort 43, 44, 45. Sodann erzeugt die zweite Einheit 112 noch einen weiteren, d.h. einen dritten Noncewert 22, bezieht noch eine weitere, d.h. eine dritte lokale Zeit 92 (vgl. Fig. 6), bestimmt den dritten Hashwert 32 aus durch Anwenden der Hashfunktion h(x) auf das Ergebnis einer Konkatenation des dritten Noncewerts 22, der dritten lokalen Zeit 92 (vgl. Fig. 6) und der mehreren empfangenen Antworten 43, 44, 45. Entsprechend wird mit den dritten Zeitservern 86, 87, 88 und in einer Weiterbildung auch mit noch weiteren Zeitservergruppen verfahren.

In Schritt S3 bildet die dritte Einheit 13 einen kryptographischen Zeitstempel 7 gemäß dem zweiten Ausführungsbeispiel für das digitale Dokument 2 aus den mehreren Noncewerten 20, 21, 22, den mehreren lokalen Zeiten 90, 91, 92 und den mehreren empfangenen Antworten 40-48.

Fig. 6 zeigt das Dokument 2 und den kryptographischen Zeitstempel 7 und veranschaulicht dessen Datenstruktur. Der kryptographische Zeitstempel 7 umfasst aneinandergereiht jeweils einen Noncewert 20, 21, ..., eine lokale Zeit 90, 91, ... und je drei Antworten 40-42, 43-45, .... Jede der Antworten 40-48 umfasst jeweils eine digitale Signatur 60-68, und jede der digitalen Signaturen 60-68 umfasst jeweils eine Zeitangabe 50-58 als Bestandteil der digitalen Signatur 60-68.

Die Pfeile und geschweiften Klammern in Fig. 6 veranschaulichen, auf welche Daten sich die jeweiligen digitalen Signaturen 60-68 beziehen. Jede der ersten bis dritten digitalen Signaturen 60, 61, 62 ist jeweils eine von einem jeweiligen ersten Zeitserver 80, 81, 82 erstellte digitale Signatur das ersten Hashwerts 30, welcher gemäß Formel VII durch Anwenden der Hashfunktion auf das Dokument 2, den Noncewert 20 und die erste lokale Zeit 90 bestimmt wurde. Jede der vierten bis sechsten digitalen Signaturen 63, 64, 65 ist jeweils eine von einem jeweiligen zweiten Zeitserver 83, 84, 85 erstellte digitale Signatur des zweiten Hashwerts 30, welcher durch Anwenden der Hashfunktion auf den zweiten Noncewert 21, die zweite lokale Zeit 91 und jede der Antworten 40, 41, 42 eines jeweiligen ersten Zeitservers 80, 81, 82 bestimmt wurde. Durch die veranschaulichten Rückbezuge der jeweiligen digitalen Signaturen in den jeweiligen Antworten auf die Hashwerte der jeweils vorherigen Antworten entsteht eine manipulationsgeschützte Hashkette.

Gemäß dem zweiten Ausführungsbeispiel umfasst jedes Element der den Zeitstempel 7 bildenden Hashkette je drei Antworten von drei Zeitservern 80-82, 83-85, 86-88. Im Vergleich zum ersten Ausführungsbeispiels bzw. einer Variante davon mit acht Zeitservern 80-88, bei welchem jedoch jedes Element der Hashkette genau eine Antwort von einem Zeitserver 80-88 enthält, besteht die Hashkette aus dreimal weniger Gliedern. Die jeweiligen drei Antworten können jeweils parallel zueinander eingeholt werden. Dadurch sinkt vorteilhafterweise die Zeitdauer, die benötigt wird, um Antworten von allen Zeitservern 80-88 zu empfangen. Somit kann gemäß dem zweiten Ausführungsbeispiel effizient eine sehr große Anzahl von Zeitservern 80-88 für den Mehrheitskonsens über den Zeitstempel 7 herangezogen werden.

Gemäß dem zweiten Ausführungsbeispiel umfasst jedes Element der Hashkette einen jeweiligen weiteren Noncewert. Indem in jedem Durchlauf von Schritt S2 ein neuer Noncewert erzeugt wird, können vorteilhafterweise die Anforderungen an die Kollisionsresistenz der Hashfunktion weiter gesenkt werden.

Gemäß dem zweiten Ausführungsbeispiel umfasst jedes Element der den Zeitstempel 7 bildenden Hashkette jeweils eine lokale Zeit 90, 91, 92. Die Zeitstempelvorrichtung 10 führt, bevor sie den Zeitstempel 7 ausgibt bzw. verwendet, eine Konsistenzprüfung durch, bei der sie die Differenzen zwischen den lokalen Zeiten 90, 91, 92 von je zwei Elementen der Hashkette mit den Differenzen zwischen den Zeitangaben 50-58 der jeweiligen Elemente der Hashkette vergleicht. In dem in Fig. 6 gezeigten Beispiel vergleicht die Zeitstempelvorrichtung 10 insbesondere die Differenz zwischen der lokalen Zeit 91 und der lokalen Zeit 90 mit einer Differenz zwischen dem Mittelwert der Zeitangaben 53, 54, 55 und dem Mittelwert der Zeitangaben 50, 51, 52. Sofern die beteiligten Zeitserver 80-85 konsistente Zeitangaben liefern, sollten diese Differenzen im Wesentlichen identisch sein. Die Zeitstempelvorrichtung 10 wendet daher ein zweites Konsistenzkriterium an, welches besagt, dass eine Differenz zwischen je zwei Mittelwerten der Zeitangaben zweier Elemente der Hashkette um nicht mehr als eine vorbestimmte zweite Toleranzschwelle von einer Differenz zwischen den jeweiligen lokalen Zeiten der entsprechenden Elemente der Hashkette sein darf. Anhand des zweiten Konsistenzkriteriums bestimmt die Zeitstempelvorrichtung 10 mit hoher Genauigkeit, ob der kryptographische Zeitstempel 7 ein gültiger Zeitstempel mit konsistenten Zeitangaben ist, oder ob mindestens einer der Zeitserver 80-88 inkonsistente Zeitangaben liefert und der kryptographische Zeitstempel 7 als kryptographischer Beweis für die Unzuverlässigkeit verwendet werden kann. Eine entsprechende Konsistenzprüfung kann auch von einer (in Fig. 5 nicht gezeigten) Vorrichtung durchgeführt werden, die zu einem späteren Zeitpunkt den Zeitstempel 7 prüft.

Es wurden Ausführungsbeispiele beschrieben, in denen eine Infrastruktur aus mehreren Zeitservern 80-88 gemäß dem vorgeschlagenen Verfahren benutzt wurde, um einen Zeitstempel 3, 7 zu erstellen, der manipulationssicher ist, auf einem Mehrheitskonsens der mehreren Zeitserver 80-88 beruht und dadurch verifiziert werden kann, ohne dass ein Vertrauensverhältnis zu allen der beteiligten Zeitserver 80-88 besteht.

Die Erfindung ist vielfältig modifizierbar. Beispielsweise kann eine beliebige und insbesondere eine sehr große Anzahl von Zeitservern zum Erstellen des Zeitstempels verwendet werden. Auch sind Kombinationen der Ausführungsbeispiele sind denkbar, beispielsweise könnten im ersten Ausführungsbeispiel ebenfalls mehrere Noncewerte erzeugt und zum Bilden des Zeitstempels 3 verwendet werden, oder im zweiten Ausführungsbeispiel könnte auf die mehreren Noncewerte verzichtet werden und nur ein Noncewert benutzt werden. Die im zweiten Ausführungsbeispiel beschriebenen lokalen Zeiten könnten auch im ersten Ausführungsbeispiel verwendet werden.

Die Zeitstempelvorrichtungen gemäß der beschriebenen Ausführungsbeispiele und ihrer Weiterbildungen und Modifikationen sind insbesondere anwendbar, um Protokolle über Bedienerentscheidungen und/oder maschinelle Verträge in einer produktions- und/oder sicherheitskritischen technischen Anlage mit Zeitstempeln zu versehen.

## Patentansprüche

1. Verfahren zum Erzeugen eines kryptographischen Zeitstempels (3, 7) für ein digitales Dokument (2) unter Verwendung mehrerer Zeitserver (80, 81, 82) mit:

   a) Erzeugen (S1) eines Noncewerts (20) und Bestimmen eines aktuellen Hashwerts (30) durch Anwenden einer vorbestimmten Hashfunktion auf den Noncewert (20) und das digitale Dokument (2) ;
   b) wiederholtem Durchführen (S2) der folgenden Schritte:

       b1) Auswählen eines der mehreren Zeitserver (80, 81, 82),
       b2) Übermitteln des aktuellen Hashwerts (30, 31, 32) an den ausgewählten Zeitserver (80, 81, 82),
       b3) Empfangen einer von dem ausgewählten Zeitserver (80, 81, 82) erstellten Antwort (40, 41, 42), die eine digitale Signatur (60, 61, 62) des aktuellen Hashwerts (30, 31, 32) und eine Zeitangabe (50, 51, 52) umfasst,
       b4) Bestimmen eines weiteren Hashwerts (31, 32) durch Anwenden der vorbestimmten Hashfunktion auf die empfangene Antwort (40, 41, 42) und
       b5) Verwenden des weiteren Hashwerts (31, 32) als den aktuellen Hashwert (31, 32); und

   c) Bilden (S3) des kryptographischen Zeitstempels (3, 7) für das digitale Dokument aus dem Noncewert (20) und den mehreren empfangenen Antworten (40, 41, 42).

**2.** Verfahren nach Anspruch 1,
**dadurch gekennzeichnet,**
**dass** die digitale Signatur (60, 61, 62) die Zeitangabe (50, 51, 52) umfasst und/oder durch Signieren des aktuellen Hashwerts (30, 31, 32) und der Zeitangabe (50, 51, 52) gebildet ist.

**3.** Verfahren nach Anspruch 1 oder 2,
**dadurch gekennzeichnet,**
**dass** der kryptographische Zeitstempel (3, 7) den Noncewert (20) und eine Abfolge der mehreren empfangenen digitalen Signaturen (60, 61, 62) und der mehreren empfangenen Zeitangaben (50, 51, 52) umfasst.

**4.** Verfahren nach einem der Ansprüche 1 bis 3,
**dadurch gekennzeichnet, dass**

in jedem Schritt b4) das Bestimmen des weiteren Hashwerts (31, 32) ein Erzeugen eines weiteren Noncewerts (21, 22) umfasst und durch Anwenden der vorbestimmten Hashfunktion auf den weiteren Noncewert (21, 22) und die empfangene Antwort (40, 41, 42) erfolgt,
in Schritt c) der kryptographische Zeitstempel (3, 7) für das digitale Dokument aus den mehreren Noncewerten (20, 21, 22) und den mehreren empfangenen Antworten (40, 41, 42) gebildet wird und
der krytographische Zeitstempel eine Abfolge der mehreren Noncewerte (20, 21, 22), der mehreren empfangenen digitalen Signaturen (60, 61, 62) und der mehreren empfangenen Zeitangaben (50, 51, 52) umfasst.

**5.** Verfahren nach einem der Ansprüche 1 bis 4, **gekennzeichnet durch**:

Identifizieren eines Zeitservers (80, 81, 82) als unzuverlässig, falls eine in einer von dem Zeitserver (80, 81, 82) erstellten Antwort (40, 41, 42) umfasste Zeitangabe (50, 51, 52) ein vorgegebenes Konsistenzkriterium nicht erfüllt.

**6.** Verfahren nach einem der Ansprüche 1 bis 4, **gekennzeichnet durch**:

d) Überprüfen der in dem in Schritt c) gebildeten kryptographischen Zeitstempel (3, 7) umfassten Zeitangaben (50, 51, 52) unter Verwendung eines vorgegebenen Konsistenzkriteriums;
e) Verwenden des kryptographischen Zeitstempels (3, 7) als vertrauenswürdigen kryptographischen Zeitstempel für das digitale Dokument (4), falls alle der Zeitangaben (50, 51, 52) das vorgegebene Konsistenzkriterium erfüllen, oder
f) Verwenden des kryptographischen Zeitstempels (3, 7) als Beweis für Unzuverlässigkeit mindestens eines der ausgewählten Zeitserver (80, 81, 82), falls mindestens eine der Zeitangaben (50, 51, 52) das vorgegebene Konsistenzkriterium nicht erfüllt.

**7.** Verfahren nach Anspruch 5 oder 6,
**dadurch gekennzeichnet,**
**dass** das vorbestimmte Konsistenzkriterium die Bedingung umfasst, dass eine zeitliche Abfolge jeweiliger Zeitangaben (50, 51, 52) einer Abfolge des jeweiligen Auswählens der entsprechenden Zeitserver (80, 81, 82) entspricht und/oder einer Abfolge der jeweiligen Zeitangaben (50, 51, 52) in dem kryptographischen Zeitstempel (3, 7) entspricht.

**8.** Verfahren nach einem der Ansprüche 5 bis 7,
**dadurch gekennzeichnet,**
**dass** das vorbestimmte Konsistenzkriterium die Bedingung umfasst, dass eine Zeitangabe (50, 51, 52) um nicht mehr als eine vorbestimmte erste Toleranzschwelle von mindestens einer der mehreren Zeitangaben (50, 51, 52) abweicht.

**9.** Verfahren nach einem der Ansprüche 5 bis 8, **gekennzeichnet durch**:

vor einem jeweiligen Schritt b4), Messen einer lokalen Zeit (90, 91, 92),
in einem jeweiligen Schritt b4), Bestimmen des weiteren Hashwerts (31, 32) durch Anwenden der vorbestimmten Hashfunktion auf die empfangene Antwort (40, 41, 42) und die gemessene lokale Zeit (90, 91, 92),
in Schritt c), Bilden des kryptographischen Zeitstempels (7) ferner aus den in den Schritten b4) gemessenen lokalen Zeiten (90, 91, 92),

wobei der krytographische Zeitstempel (7) den Noncewert (20) und eine Abfolge der mehreren empfangenen digitalen Signaturen (60, 61, 62), der mehreren empfangenen Zeitangaben (50, 51, 52) und der mehreren gemessenen lokalen Zeiten (90, 91, 92) umfasst und

das vorbestimmte Konsistenzkriterium die Bedingung umfasst, dass eine Differenz zwischen je zwei der Zeitangaben (50, 51, 52) um nicht mehr als eine vorbestimmte zweite Toleranzschwelle von einer Differenz zwischen den entsprechenden zwei der gemessenen lokalen Zeiten (90, 91, 92) abweicht.

10. Verfahren nach einem der Ansprüche 1 bis 9,
**dadurch gekennzeichnet,**
**dass** in den jeweiligen Schritten b1) das Auswählen eines der mehreren Zeitserver (80, 81, 82) gemäß einer vorgegebenen Reihenfolge oder zufällig erfolgt.

11. Verfahren nach einem der Ansprüche 1 bis 10, **gekennzeichnet durch**:

in Schritt b1) Auswählen mehrerer der mehreren Zeitserver (80-88),
in Schritt b2) Übermitteln des aktuellen Hashwerts (30-32) an jeden der mehreren ausgewählten Zeitserver (80-88),
in Schritt b3) Empfangen einer jeweiligen Antwort (40-48) von jedem der ausgewählten Zeitserver (80-88), die jeweils eine digitale Signatur (60-68) des aktuellen Hashwerts (30-32) und eine Zeitangabe (50-58) umfasst, und
in Schritt b4) Bestimmen des weiteren Hashwerts (31, 32) durch Anwenden der vorbestimmten Hashfunktion auf die empfangenen Antworten (40-48) der mehreren ausgewählten Zeitserver (80-88).

12. Verfahren nach einem der Ansprüche 1 bis 11,
**dadurch gekennzeichnet,**
**dass** in einem jeweiligen Schritt b3) die Antwort (40, 41, 42) ferner einen einen Geltungsbereich der digitalen Signatur beschreibenden Identifier umfasst und die digitale Signatur (60, 61, 62) eine digitale Signatur einer Kombination aus dem aktuellen Hashwert (30, 31, 32) und des den Geltungsbereich der digitalen Signatur beschreibenden Identifiers ist,
wobei der krytographische Zeitstempel (3, 7) den Noncewert (20) und eine Abfolge der mehreren empfangenen digitalen Signaturen (60, 61, 62), der mehreren empfangenen Zeitangaben (50, 51, 52) und der mehreren empfangenen Identifier umfasst.

13. Computerprogrammprodukt, welches auf einer programmgesteuerten Einrichtung die Durchführung eines Verfahrens nach einem der Ansprüche 1 bis 12 veranlasst.

14. Vorrichtung (1, 10) zum Erzeugen eines kryptographischen Zeitstempels (3, 7) für ein digitales Dokument (2) unter Verwendung mehrerer Zeitserver (80, 81, 82) mit

a) einer ersten Einheit (11, 111) zum Erzeugen eines Noncewerts (20) und zum Bestimmen eines aktuellen Hashwerts (30) durch Anwenden einer vorbestimmten Hashfunktion auf den Noncewert (20) und das digitale Dokument (2);
b) einer zweiten Einheit (12, 112) zum wiederholten Durchführen der folgenden Schritte:

b1) Auswählen eines der mehreren Zeitserver (80, 81, 82),
b2) Übermitteln des aktuellen Hashwerts (30, 31, 32) an den ausgewählten Zeitserver (80, 81, 82),
b3) Empfangen einer von dem ausgewählten Zeitserver (80, 81, 82) erstellten Antwort (40, 41, 42), die eine digitale Signatur (60, 61, 62) des aktuellen Hashwerts (30, 31, 32) und eine Zeitangabe (50, 51, 52)umfasst,
b4) Bestimmen eines weiteren Hashwerts (31, 32) durch Anwenden der vorbestimmten Hashfunktion auf die empfangene Antwort (40, 41, 42) und
b5) Verwenden des weiteren Hashwerts (31, 32) als den aktuellen Hashwert (31, 32); und

c) einer dritten Einheit (13, 113) zum Bilden des kryptographischen Zeitstempels (3, 7) für das digitale Dokument (2) aus dem Noncewert (20) und den mehreren empfangenen Antworten (40, 41, 42).

15. Vorrichtung zum Protokollieren von Bedienerentscheidungen und/oder maschinellen Entscheidungen, die dazu eingerichtet ist, digitale Dokumente (2) mit nach einem Verfahren nach einem der Ansprüche 1 bis 12 erzeugten kryptographischen Zeitstempeln (3, 7) zu versehen, wobei die digitalen Dokumente (2) Protokolle über Bedienerentscheidungen und/oder maschinelle Verträge umfassen.

# FIG 1

FIG 2

FIG 3

# FIG 4

FIG 5

EP 3 425 845 A1

FIG 6

**EP 3 425 845 A1**

Europäisches
Patentamt

European
Patent Office

Office européen
des brevets

**EUROPÄISCHER RECHERCHENBERICHT**

Nummer der Anmeldung

EP 17 17 9823

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | Prof S H Ahmed ET AL: "DIGITAL TIMESTAMPING: A WEB-BASED ANONYMOUS DISTRIBUTED SOLUTION", , 6. August 2008 (2008-08-06), XP055438014, Gefunden im Internet: URL:http://scholar.msa.edu.eg:92/sites/default/files/ehabemam/files/timestamping_paper-ehab_emam.pdf [gefunden am 2018-01-03] | 1-3,5-15 | INV. H04L9/32 H04L9/12 |
| A | * Zusammenfassung * * Seite 10, Zeile 7 - Seite 13, Zeile 2; Abbildung 3 * ----- | 4 | |
| X | Alexis Bonnecaze ET AL: "A Distributed Time Stamping Scheme", , 3. September 2005 (2005-09-03), XP055438020, DOI: 10.1007/BF03253323 Gefunden im Internet: URL:http://alexis.bonnecaze.perso.luminy.univ-amu.fr/articles/sitis.pdf [gefunden am 2018-01-03] | 1-3,5-15 | RECHERCHIERTE SACHGEBIETE (IPC) H04L |
| A | * Zusammenfassung * * Seite 2, rechte Spalte, Zeile 15 - Seite 5, linke Spalte, Zeile 11 * ----- | 4 | |
| A | US 2015/295720 A1 (BULDAS AHTO [EE] ET AL) 15. Oktober 2015 (2015-10-15) * Absatz [0039] - Absatz [0040] * * Absatz [0058] - Absatz [0059] * ----- | 1-15 | |

Der vorliegende Recherchenbericht wurde für alle Patentansprüche erstellt

| Recherchenort | Abschlußdatum der Recherche | Prüfer |
|---|---|---|
| München | 4. Januar 2018 | Spranger, Stephanie |

**ANHANG ZUM EUROPÄISCHEN RECHERCHENBERICHT**
**ÜBER DIE EUROPÄISCHE PATENTANMELDUNG NR.**

EP 17 17 9823

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-01-2018

| Im Recherchenbericht angeführtes Patentdokument | Datum der Veröffentlichung | Mitglied(er) der Patentfamilie | Datum der Veröffentlichung |
|---|---|---|---|
| US 2015295720 A1 | 15-10-2015 | EP 3130104 A1<br>US 2015295720 A1<br>WO 2015155368 A1 | 15-02-2017<br>15-10-2015<br>15-10-2015 |

Für nähere Einzelheiten zu diesem Anhang : siehe Amtsblatt des Europäischen Patentamts, Nr.12/82

EPO FORM P0461